# EUROPÄISCHE PATENTSCHRIFT

(11) **EP 0 819 375 B1**
(45) Veröffentlichungstag und Bekanntmachung des Hinweises auf die Patenterteilung: **11.04.2001**
(21) Anmeldenummer: 97110719.8
(22) Anmeldetag: 01.07.1997
(51) Int. Cl.: A01F 15/08

(54) **Antriebssystem für landwirtschaftliche Grossballenpresse**
Gear drive for balers
Système d'entraînement pour presse à balles

(30) Priorität: 16.07.1996 DE 19628606
(43) Veröffentlichungstag der Anmeldung: 21.01.1998
(73) Patentinhaber: Usines Claas France S.A., 57140 St. Remy / Woippy (FR)
(72) Erfinder: Hawlas, Martin, 33428 Harsewinkel (DE); Nonhoff, Ansgar, 48653 Coesfeld (DE); Scholz, Egbert, 33378 Rheda (DE)
(74) Vertreter: Weeg, Thomas

(56) Entgegenhaltungen:
- EP-A- 0 209 743
- DD-A- 299 455
- DE-A- 19 538 370

## Beschreibung

Die Erfindung betrifft ein Antriebssystem für eine landwirtschaftliche Großballenpresse mit einer in Längsrichtung angeordneten nach hinten offenen Ballenpreßkammer, einem darin hin und her beweglichen Preßkolben, Einrichtungen zum Aufnehmen von Erntegut vom Feld, einem Förderkanal zur Ansammlung einer Aufgabeportion von Erntegut und zu deren Transport in die Ballenpreßkammer mittels einer zusätzlichen Fördereinrichtung, einer Bindeeinrichtung zum Binden fertig gepreßter Ballen sowie einem mit einer Eingangswelle getriebenen Antriebssystem zum Antrieb aller Funktionselemente, wobei eine Antriebswelle außerhalb des Kurbelkreises der Kurbelarme zum Antrieb des Preßkolbens liegt.

Eine gattungsgemäße Großballenpresse ist in der Schrift DD-A-299 455 beschrieben. Großballenpressen werden gewöhnlich von Ackerschleppern gezogen und über eine an die Zapfwelle des Ackerschleppers angeschlossene Gelenkwelle angetrieben. Zur Verringerung der Herstellkosten sowie zur Erhöhung der Betriebssicherheit und des Wirkungsgrades wird dort vorgeschlagen, die Kurbelarme für den Preßkolben vom Hauptgetriebe und alle Wellen für die übrigen Funktionselemente von einer außerhalb des Kurbelkreises der Kurbelarme angeordneten Antriebswelle aus anzutreiben. Die dort gezeigte Reduzierung der Eingangsdrehzahl der Gelenkwelle, die bei etwa 1.000 U/min. liegt, auf die Antriebswelle der übrigen Funktionselemente und auf die Drehzahl der Kurbelarme für den Preßkolben erlaubt keine großen Drehzahldifferenzen der Abtriebe. So dreht beispielsweise die Antriebswelle der übrigen Funktionselemente mit ca. 200 U/min und die Antriebswelle für die Kurbelarme mit ca. 60 U/min. Die relativ niedrige Drehzahl der Antriebswelle der übrigen Funktionselemente hat zur Folge, daß von dieser Welle ein hohes Drehmoment übertragen wird, was eine entsprechend starke Dimensionierung der nachgeordneten Getriebe und Kraftübertragungsmittel wie Wellen, Ketten etc. erforderlich macht. Wollte man das gezeigte Antriebssystem so verändern, daß höhere Drehzahlen der Antriebswelle der übrigen Funktionselemente möglich werden, müssen sich die Durchmesser der Zahnräder im Hauptgetriebe verändern, was zur Folge hätte, daß entweder zusätzliche Zahnradstufen erforderlich werden oder einzelne Zahnräder so groß werden, daß sie nur noch schwer in den vorhandenen Bauraum passen. Beide Maßnahmen laufen jedoch der Zielsetzung zuwider, die Herstellkosten zu verringern und den Wirkungsgrad zu verbessern. Aus Gründen der Baubreiten von Großballenpressen ist es schwierig, alle Antriebe von einer Welle abzuleiten. Insbesondere sollte der Antrieb der Bindeeinrichtung möglichst synchron zum Antrieb des Preßkolbens erfolgen, um eine optimale Funktion ohne die Gefahr von Beschädigungen der Bindenadel sicherzustellen.

Es ist daher Aufgabe der vorliegenden Erfindung, eine kostengünstige und schmal bauende Lösung zu finden, die eine möglichst hohe Drehzahl der Antriebswelle für übrige Funktionen erlaubt, ohne viel Bauraum für das Hauptgetriebe zu beanspruchen, wobei der Antrieb der Bindeeinrichtung möglichst direkt dem Preßkolben nachgeordnet sein soll.

Die Aufgabe wird gelöst, indem die Eingangswelle die Antriebsenergie über eine Kegelradstufe oder Schneckentrieb auf eine Zwischenwelle überträgt, von der aus die Antriebsenergie über mit der Zwischenwelle drehfest verbundene Zahnräder auf die außerhalb des Kurbelkreises der Kurbelarme gelegene Antriebswelle für die Funktionselemente, Aufnahmevorrichtung, Schneidvorrichtung und Fördereinrichtung, einerseits und die Antriebswelle der Kurbelarme zum Antrieb der Funktionselemente Preßkolben und Bindeeinrichtung andererseits und die Antriebskräfte zum Antrieb der Bindeeinrichtung von der Antriebswelle der Kurbelarme zum Antrieb des Preßkolbens aus über zumindest eine Zahnradstufe und zusätzliche Wellen oder Kettenantriebe zur Bindeeinrichtung übertragen werden. Die Anordnung der beiden Zahnräder auf einer Zwischenwelle erlaubt eine größere Bandbreite bei der Festlegung der jeweiligen Abtriebsdrehzahlen, ohne daß dadurch das Getriebe von den Abmessungen her größer wird oder zusätzliche Zahnradstufen erforderlich werden. Je nach Größe der Kegelverzahnung auf der Eingangswelle bzw. der Steigung der Schneckengänge und des Teller- oder Zahnrades, das die Antriebskraft von der Eingangswelle auf die Zwischenwelle überträgt, können beispielsweise Abtriebsdrehzahlen einer außerhalb des Kurbelkreises der Kurbelarme gelegenen Antriebswelle von 400 U/min. und mehr bei einer Drehzahl der Antriebswelle der Kurbelarme von ca. 50 U/min. erreicht werden, obwohl das erfindungsgemäße Getriebe insgesamt kleiner baut als das aus dem Stand der Technik bekannte Getriebe. Die höhere Antriebsdrehzahl erlaubt eine kostensenkende schwächere Auslegung der nachgeordneten Elemente zur Übertragung der Antriebskraft.

In einer anderen Ausgestaltung der Erfindung kann die Antriebskraft auf die Antriebswelle der Kurbelarme übertragen und dabei die Eingangsdrehzahl auf die zum Antrieb der Kurbelarme, die den Preßkolben antreiben, erforderliche Drehzahl verringert werden und von dort aus die Antriebskraft zur außerhalb des Kurbelkreises der Kurbelarme gelegenen Antriebswelle über Zahnräder unter Erhöhung der Drehzahl übertragen werden.

Gegenüber einem Antrieb der Bindeeinrichtung über die außerhalb des Kurbelkreises der Kurbelarme gelegenen Antriebswelle ergeben sich die Vorteile, daß seitlich Bauraum an der Seite der Großballenpresse gespart wird, weil die Kraftübertragung zur Bindeeinrichtung nicht seitlich an der Ballenpreßkammer vorbeigeführt werden muß, beim Vorhandensein einer Abschaltkupplung für die Aufnahme- und Fördereinrichtung der Antrieb der Bindeeinrichtung davon unabhängig eingeschaltet bleiben kann und daß die Bindeeinrichtung besser sysnchronisiert zum Preßkolben angetrieben ist, da auf die vorgeschlagene Weise das zusätzliche Spiel aus den Zahnrädern und Seitengetrieben bei einem Antrieb über die außerhalb des Kurbelkreises der Kurbelarme gelegenen Welle entfällt. Auch können die Antriebskräfte zum Antrieb einer Hydraulikpumpe von der Antriebswelle der Kurbelarme zum Antrieb des Preßkolbens aus über zumindest eine Zahnradstufe auf die Hydraulikpumpe übertragen werden, wobei die Hydraulikpumpe zwischen den Kurbelarmen an einer Seite des Hauptgetriebes oder an einer anderen Stelle des Hauptgetriebes, beispielsweise auf einem Wellenstummel, angeordnet ist.

Im folgenden wird die Erfindung anhand von Ausführungsbeispielen näher erläutert. Es zeigen:
- Figur 1: eine landwirtschaftliche Großballenpresse in der Seitenansicht,
- Figur 2: eine schematische Darstellung eines Antriebssystems.

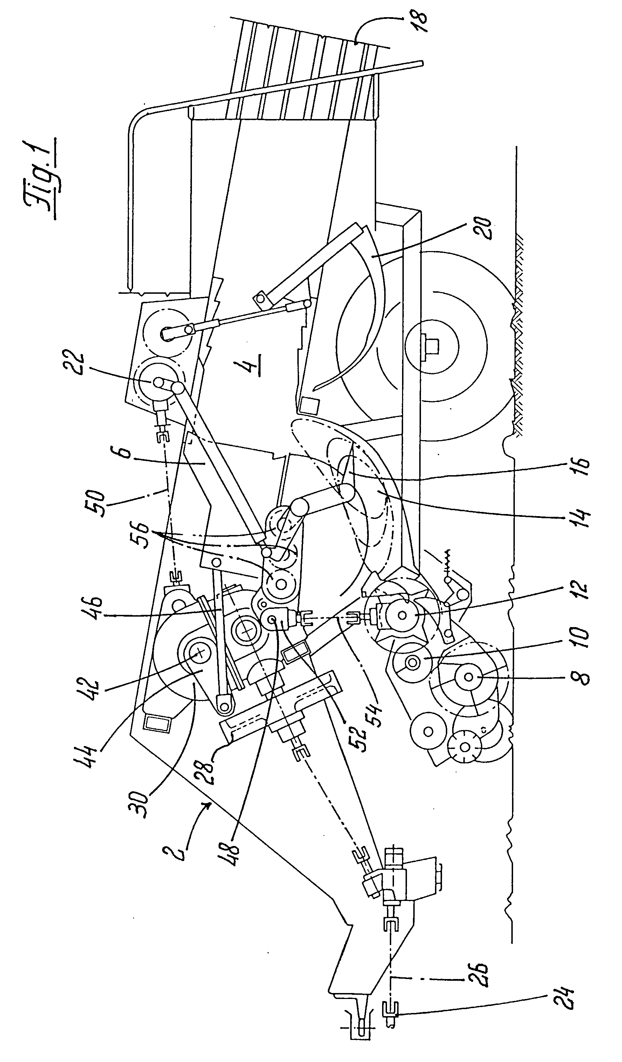

In Figur 1 ist eine landwirtschaftliche Großballenpresse 2 zu sehen, die eine Ballenpreßkammer 4 mit einem darin hin und her beweglichen Preßkolben 6 aufweist. Unterhalb des Hauptgetriebes ist eine Aufnahmevorrichtung 8 angeordnet, die das Erntegut vom Boden aufnimmt und durch seitliche Förderschnecken 10 mittig zusammengeführt der Schneidvorrichtung 12 zuführt. Von dort aus wird das Erntegut in den Förderkanal 14 weiterbefördert, wo es gesammelt und von der Fördereinrichtung 16 als eine Aufgabeportion in die Ballenpreßkammer 4 geworfen wird, wenn der Kolben 6 im Laufe seiner zyklischen Bewegungen die Zuführöffnung zur Ballenpreßkammer 4 freigibt. In der Preßkammer 4 wird die zugeführte Aufgabeportion durch die Hubbewegung des Preßkolbens 6 gegen das zuvor gepreßte Gut gedrückt, dabei verdichtet und schließlich mit dem zuvor gepreßten Gut in Richtung des Abgabeendes 18 der Ballenpreßkammer 4 geschoben. Auf ein Auslösesignal befördert die Bindenadel 20 mit einer Schwenkbewegung das Bindegarn durch den Ballenstrang hindurch zur Bindeeinrichtung 22, in der das Bindegarn geschnitten und geknotet wird. Der fertig geknotete Ballen kann dann über das Abgabeende 18 auf das Feld rutschen.

Für die Erfindung spielt es keine Rolle, ob eine Schneidvorrichtung 12 vorhanden ist oder ob die Fördereinrichtung 16 auf die beschriebene oder auf andere aus dem Stand der Technik bekannte Weise, beispielsweise als Rotationsförderer, arbeitet oder ob mehrere Förderer vorhanden sind oder ob die Fördereinrichtung eine oder mehrere Hubbewegungen während eines Preßhubes des Kolbens 6 ausführt. Maßgeblich ist, daß die beschriebenen Organe für ihre Funktion auf ein Antriebssystem angewiesen sind.

Der Antrieb der Arbeitsorgane der Großballenpresse erfolgt über eine an eine Zapfwelle 24 eines nicht näher dargestellten Ackerschleppers angeschlossene Gelenkwelle 26, die über ein zwischengeschaltetes Masseschwungrad im Hauptgetriebe 30 mündet. Im Hauptgetriebe 30 verzweigt sich die Antriebskraft auf die Antriebswelle 42, auf der die Kurbelarme 44 drehfest aufgesetzt sind und die über verbundene Pleuelstangen 46 die Antriebskraft auf den Preßkolben 6 übertragen, und auf die Antriebswelle 48, die außerhalb des Kurbelkreises der Kurbelarme 44 angeordnet ist. Während der Antrieb der Bindeeinrichtung 22 über Zahnräder und die Gelenkwelle 50 von der Antriebswelle 42 erfolgt, werden die Aufnahmevorrichtung 8 und die Schneidvorrichtung 12 über ein gemeinsames Getriebe 52 und eine Gelenkwelle 54 von der Ausgangswelle 48 angetrieben. Die Fördereinrichtung 16 wird über eine seitlich der Großballenpresse 2 angebrachte Gruppe von miteinander in Wirkverbindung stehenden Stirnrädern 56 angetrieben, wobei das erste der Zahnräder 56 wiederum über eine nicht dargestellte Welle und einen Zahnradsatz mit der Antriebswelle 48 antriebsverbunden ist.

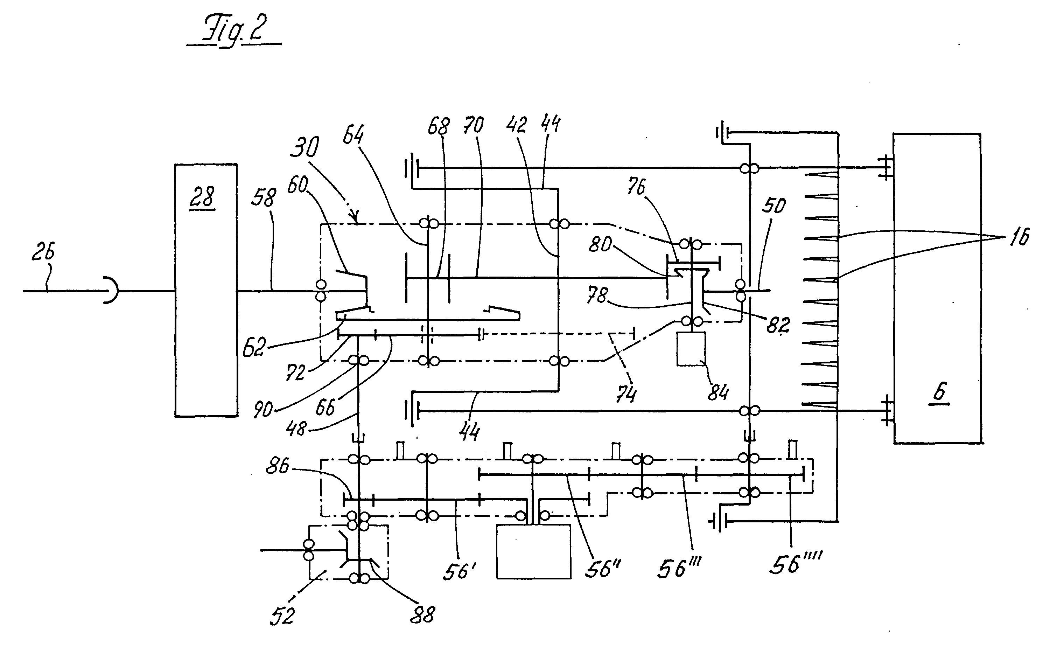

In Figur 2 ist eine schematische Darstellung des Antriebskonzeptes zu sehen. Die Eingangswelle 58 wirkt über ein Kegelrad 60 auf ein Tellerrad 62, das mit der Zwischenwelle 64 drehfest verbunden ist. Die Drehbewegung der Eingangswelle 58 wird über die Kegelradstufe 60, 62 auf die Zwischenwelle 64 übertragen. Anstelle der Kegelradstufe 60, 62 kann auch eine Lösung mit einem Schneckentrieb und einem in den Schneckentrieb eingreifenden Zahnrad, das drehfest auf der Zwischenwelle 64 befestigt ist, vorgesehen werden. Ebenfalls mit der Zwischenwelle 64 drehfest verbunden sind die Zahnräder 66 und 68. Während das Zahnrad 68 die Antriebskraft über das drehfest montierte Zahnrad 70 auf die Antriebswelle 42 überträgt, die die Kurbelarme 44 antreibt, überträgt das Zahnrad 66 die Antriebskraft auf das auf der Antriebswelle 48 drehfest angeordnete Zahnrad 72. Die Antriebswelle 48 ist außerhalb des Kurbelkreises der Kurbelarme 44 gelagert. Alternativ zur Übertragung der Antriebskraft über die Zahnräder 66, 72 kann die Antriebskraft auch über das gestrichelt dargestellte und drehfest auf der Welle 42 befestigte Zahnrad 74 übertragen werden, wenn das Zahnrad 66 drehbar auf der Welle 64 gelagert ist. In diesem Fall erfolgt die Übertragung der Antriebskraft von der Welle 42 über die Zahnräder 74, 66 und 72 auf die Antriebswelle 48.

Das Zahnrad 70 steht in Eingriff mit einem Zahnrad 76, das drehfest auf einer Welle 78 gelagert ist. Ebenfalls drehfest auf der Welle 78 ist das Kegelrad 80 befestigt, daß die vom Zahnrad 70 abgenommene Antriebskraft auf das drehfest mit der Welle 50 verbundene Kegelrad 82 überträgt. Auf diese Weise kann die Antriebskraft über die Welle 50 zur Bindeeinrichtung übertragen werden. Ebenfalls mit der Welle 78 antriebsmäßig verbunden ist der Hydraulikmotor 84, der seitlich am Hauptgetriebe 30 befestigt ist. Ein Hydraulikmotor kann auch mit der Zwischenwelle 64 antriebsverbunden sein.

Abweichend von Figur 1 wirkt in Figur 2 die Antriebswelle 48 nicht über eine Zahnradstufe, sondern direkt auf das Winkelgetriebe 52. Mit der Antriebswelle 48 drehfest verbunden sind die Zahnräder 86, 88, die die Antriebskraft mit geeigneten Mitteln auf die Fördervorrichtung bzw. die Aufnahme- und, soweit vorhanden, die Schneidvorrichtung übertragen. Durch die vergleichsweise hohe Drehzahl des Zahnrades 72 können die Antriebswelle 48, die Lager 90, das Gehäuse 52 sowie die Welle 52 wegen der geringeren Momente schwächer ausgelegt werden als bei geringeren Drehzahlen des Zahnrades 72, was zu Kosteneinsparungen führt. Auch beansprucht die erfindungsgemäße Lösung nur wenig Bauraum.

## Patentansprüche

1. Antriebssystem für eine landwirtschaftliche Großballenpresse mit einer in Längsrichtung angeordneten nach hinten offenen Ballenpreßkammer, einem darin hin und her beweglichen Preßkolben, Einrichtungen zum Aufnehmen von Erntegut vom Feld, einem Förderkanal zur Ansammlung einer Aufgabeportion von Erntegut und zu deren Transport in die Ballenkammer (4) mittels einer zusätzlichen Fördereinrichtung, einer Bindeeinrichtung (22) zum Binden fertig gepreßter Ballen sowie einem mit einer Eingangswelle getriebenen Antriebssystem zum Antrieb aller Funktionselemente, wobei eine Antriebswelle (48) außerhalb des Kurbelkreises der Kurbelarme (44) zum Antrieb des Preßkolbens (16) liegt,
**dadurch gekennzeichnet**,
daß die Eingangswelle (58) die Antriebskraft über eine Kegelradstufe (60,62) oder Schneckentrieb auf eine Zwischenwelle (64) überträgt, von der aus die Antriebskraft über drehfest mit der Zwischenwelle verbundene Zahnräder (66, 68) auf die außerhalb des Kurbeikreises der Kurbelarme gelegene Antriebswelle (48) für die Funktionselemente, Aufnahmevorrichtung (8), Schneidvorrichtung (12) und Fördereinrichtung (16), einerseits und die Antriebswelle (42) der Kurbelarme (44) zum Antrieb der Funktionselemente Preßkolben und Bindeeinrichtung (22), (6) andererseits und daß die Antriebskräfte zum Antrieb der Bindeeinrichtung (22) von der Antriebswelle (42) der Kurbelarme (44) zum Antrieb des Preßkolbens (6) aus über zumindest eine Zahnradstufe und zusätzliche Wellen oder Kettentriebe zur Bindeeinrichtung übertragen werden.

2. Antriebssystem nach dem Oberbegriff von Anspruch 1,
**dadurch gekennzeichnet**,
daß die Eingangswelle (58) die Antriebskraft über eine Kegelradstufe (60, 62) oder Schneckentrieb auf eine Zwischenwelle (64) überträgt, von der aus die Antriebskraft auf die Antriebswelle (42) der Kurbelarme (44) übertragen wird und dabei die Eingangsdrehzahlen auf die zum Antrieb der Kurbelarme (44), die den Preßkolben (6) antreiben, erforderliche Drehzahl verringert werden und von dort aus die Antriebskraft zur außerhalb des Kurbelkreises der Kurbelarme (44) gelegenen Antriebswelle (48) über Zahnräder unter Erhöhung der Drehzahl übertragen wird, wobei die Antriebskräfte zum Antrieb der Bindeeinrichtung (22) von der Antriebswelle (42) der Kurbelarme (44) zum Antrieb des Preßkolbens (6) aus über zumindest eine Zahnradstufe und zusätzliche Wellen oder Kettentriebe zur Bindeeinrichtung übertragen werden.

3. Antriebssystem nach Anspruch 1 oder 2,
**dadurch gekennzeichnet**,
daß die Antriebskräfte zum Antrieb einer Hydraulikpumpe (84) von der Antriebswelle (42) der Kurbelarme (44) zum Antrieb des Preßkolbens (6) aus über zumindest eine Zahnradstufe auf die Hydraulikpumpe (84) übertragen werden, wobei die Hydraulikpumpe an einer Seite des Hauptgetriebes (30) angeordnet ist.

## Claims

1. A drive system for an agricultural big bale press comprising a rearwardly open bale pressing chamber which is arranged in the longitudinal direction, a pressing piston which is reciprocatable therein, devices for picking up crop material from the field, a conveyor passage for accumulating a feed portion of crop material and for transporting same into the bale chamber (4) by means of an additional conveyor device, a binding device (22) for binding bales in the finished pressed condition and a drive system driven with an input shaft for driving all functional elements, wherein a drive shaft (48) is disposed outside the crank circle of the crank arms (44) for driving the pressing piston (6), characterised in that the input shaft (58) transmits the drive force by way of a bevel gear stage (60, 62) or worm drive to an intermediate shaft (64) from which the drive force is transmitted by way of gears (66, 68) non-rotatably connected to the intermediate shaft to the drive shaft (48) which is disposed outside the crank circle of the crank arms for the functional elements, pick-up device (8), cutting device (12) and conveyor device (16) on the one hand and the drive shaft (42) of the crank arms (44) for driving the functional elements, the pressing piston (6) and the binding device (22) on the other hand and that the drive forces for driving the binding device (22) are transmitted from the drive shaft (42) of the crank arms (44) for driving the pressing piston (6) by way of at least one gear stage and additional shafts or chain drives to the binding device.

2. A drive system according to the classifying portion of claim 1 characterised in that the input shaft (58) transmits the drive force by way of a bevel gear stage (60, 62) or worm drive to an intermediate shaft (64) from which the drive force is transmitted to the drive shaft (42) of the crank arms (44) and in that respect the input rotary speeds are reduced to the rotary speed required to drive the crank arms (44) which drive the pressing piston (6) and from there the drive force is transmitted to the drive shaft (48) which is disposed outside the crank circle of the crank arms (44) by way of gears with an increase in the rotary speed, wherein the drive forces for driving the binding device (22) are transmitted from the drive shaft (42) of the crank arms (44) for driving the pressing piston (6) by way of at least one gear stage and additional shafts or chain drives to the binding device.

3. A drive system according to claim 1 or claim 2 characterised in that the drive forces for driving a hydraulic pump (84) are transmitted from the drive shaft (42) of the crank arms (44) for driving the pressing piston (6) by way of at least one gear stage to the hydraulic pump (84), the hydraulic pump being arranged at one side of the main transmission (30).

## Revendications

1. Système d'entraînement pour une presse agricole à grosses balles comportant une chambre de pressage de balles qui est disposée dans la direction longitudinale et est ouverte vers l'arrière, un piston de presse qui se déplace dans celle-ci suivant un mouvement alternatif de va-et-vient, des dispositifs de ramassage du produit récolté sur le champ, un canal d'alimentation pour amasser un volume de chargement de produit récolté et l'acheminer dans la chambre à balles (4) à l'aide d'un dispositif de transport additionnel, un dispositif de liage (22) pour lier les balles terminées pressées ainsi qu'un système d'entraînement mû par un arbre d'entrée, pour l'entraînement de tous les éléments fonctionnels, un arbre d'entraînement (48) étant disposé en dehors du cercle de rotation des bras de manivelles (44) entraînant le piston de presse (16), caractérisé en ce que l'arbre d'entrée (58), à travers un étage à pignons coniques (60, 62) ou un mécanisme à vis sans fin, transmet la force motrice à un arbre intermédiaire (64), à partir duquel la force motrice est transmise par des pignons (66, 68) solidaires en rotation de l'arbre intermédiaire, d'une part à l'arbre d'entraînement (48) situé en dehors du cercle de rotation des bras de manivelles, pour les éléments fonctionnels dispositif de ramassage (8), dispositif de coupe (12) et dispositif ameneur (16) et d'autre part à l'arbre d'entraînement (42) des bras de manivelles (44) pour l'entraînement des éléments fonctionnels piston de presse (6) et dispositif de liage (22), et en ce que les forces d'entraînement pour l'entraînement du dispositif de liage (22) sont transmises de l'arbre d'entraînement (42) des bras de manivelles (44) entraînant le piston de presse (6) au dispositif de liage, à travers au moins un étage de pignons et des arbres supplémentaires ou des mécanismes à chaînes.

2. Système d'entraînement selon le préambule de la revendication 1, caractérisé en ce que l'arbre d'entrée (58) transmet la force d'entraînement à travers un étage à pignons coniques (60, 62) ou un mécanisme à vis sans fin, à un arbre intermédiaire (64) à partir duquel ladite force d'entraînement est transmise à l'arbre d'entraînement (42) des bras de manivelles (44), les vitesses d'entrée étant abaissées à la vitesse de rotation nécessaire pour l'entraînement des bras de manivelles (44) entraînant le piston de presse (6) et de là, la force d'entraînement est transmise à l'arbre d'entraînement (48) situé en dehors du cercle de rotation des bras de manivelles (44), à travers des pignons en augmentant la vitesse de rotation, les forces d'entraînement pour l'entraînement du dispositif de liage (22) étant transmises de l'arbre d'entraînement (42) des bras de manivelles (44) entraînant le piston de presse (6) au dispositif de liage à travers un étage de pignon dentés et des arbres supplémentaires ou des mécanismes à chaînes.

3. Système d'entraînement selon la revendication 1 ou 2, caractérisé en ce que les forces d'entraînement pour l'entraînement de la pompe hydraulique (84) sont transmises de l'arbre d'entraînement (42) des bras de manivelles (44) entraînant le piston de presse (6) à la pompe hydraulique (84), à travers au moins un étage de pignons, la pompe hydraulique étant disposée sur un côté du réducteur principal (30).
